# EUROPEAN PATENT APPLICATION

(11) **EP 4 568 088 A1**
(43) Date of publication of application: **11.06.2025**
(21) Application number: 24216540.5
(22) Date of filing: 29.11.2024
(51) Int. Cl.: H02M 1/00, H02J 3/38, H02M 7/48

(54) **METHOD AND DEVICE FOR CONTROLLING INVERTER, INVERTER AND PHOTOVOLTAIC SYSTEM**

(30) Priority: 08.12.2023 CN 202311693992
(71) Applicant: Sungrow Power Supply Co., Ltd., Hefei, Anhui 230088 (CN)
(72) Inventor: ZHOU, Yinyin, Hefei, Anhui, 230088 (CN); YANG, Yongchang, Hefei, Anhui, 230088 (CN); WANG, Wei, Hefei, Anhui, 230088 (CN); SHI, Zhe, Hefei, Anhui, 230088 (CN); HUANG, Zhifeng, Hefei, Anhui, 230088 (CN); XING, Jun, Hefei, Anhui, 230088 (CN)
(74) Representative: Zacco Norway AS

(57) **Abstract**

A method and device for controlling an inverter, an inverter and a photovoltaic system are provided. Maximum voltage among input terminals of multiple boost circuits included in the inverter and a minimum voltage for grid-connection are obtained. When the maximum voltage is greater than or equal to the minimum voltage, a first boost circuit in the inverter is controlled to stop boosting. The voltage at an output terminal of a second boost circuit is controlled to be increased to the maximum voltage, and the second boost circuit includes other boost circuits in the inverter other than the first boost circuit. This ensures the voltage at the output terminal of the second boost circuit no longer stabilizes at the voltage that would have been increased based on the maximum voltage through the boost circuits. This method reduces boosting ratios of low voltage boost circuits, switching losses and temperatures of components.

## Description

### FIELD

The present disclosure relates to the field of photovoltaic technology, in particular to a method and device for controlling an inverter, an inverter and a photovoltaic system.

### BACKGROUND

In a case that an inverter operates in a grid-connected state, the inverter, generally, includes multiple boost circuits to address scenarios where direct current input voltages fluctuate between high and low voltages. In conventional technology, all boost circuits at the direct current side are turned on simultaneously, causing the bus voltage exceeds the highest input voltage of the boost circuits. This leads to substantial boosting ratios of the low voltage boost circuits and significant switching losses. Additionally, it is more likely to cause component overheating, which results in the device operating at a derating level, thereby compromising power generation output.

### SUMMARY

In view of this, a method and device for controlling an inverter, an inverter and a photovoltaic system are provided according to the present disclosure, which is interested in reducing the boosting ratios of the low voltage boost circuits to minimize the switching losses and component overheating.

In a first aspect, a method for controlling an inverter is provided according to embodiments of the present disclosure. The inverter includes multiple boost circuits, a direct current bus and an inversion circuit, an output terminal of each of the multiple boost circuits is connected to the direct current bus, the inversion circuit obtains a direct current from the direct current bus and converts the direct current to an alternating current for output, the method includes:
determining a maximum voltage among voltages at input terminals of the multiple boost circuits and a minimum voltage for grid-connection required by the inverter for grid-connection;
stopping boosting a first boost circuit in the inverter in a case that the maximum voltage is greater than or equal to the minimum voltage for grid-connection; where a voltage at an input terminal of the first boost circuit is greater than or equal to the minimum voltage for grid-connection, and the first boost circuit includes a boost circuit, among the multiple boost circuits, which corresponds to the maximum voltage; and
controlling a voltage at an output terminal of a second boost circuit to be increased to the maximum voltage, and the second boost circuit includes the multiple boost circuits in the inverter other than the first boost circuit.

In an embodiment, the method further includes: controlling voltages of output terminals of the multiple boost circuits included in the inverter to be increased to the minimum voltage for grid-connection, in a case that the maximum voltage is less than the minimum voltage for grid-connection.

In an embodiment, the first boost circuit is the boost circuit corresponding to the maximum voltage.

In an embodiment, the first boost circuit is a boost circuit, among the multiple boost circuits, of which the voltage at the input terminal is greater than or equal to a first threshold; where, the first threshold is a larger one between the minimum voltage for grid-connection and the maximum voltage minus a first voltage difference, and the first voltage difference is the maximum voltage multiplied by a minimum boosting ratio minus the maximum voltage, where the minimum boosting ratio corresponds to the boost circuit corresponding to the maximum voltage.

In an embodiment, the minimum voltage for grid-connection is obtained from multiplying a voltage of a power grid by 1.414 plus a first value, and the first value ranges from 0 to 20V

In an embodiment, the stopping boosting the first boost circuit in the invert includes: controlling a bypass circuit of the first boost circuit to be turned on to short-circuit the first boost circuit; where each of the multiple boost circuits is connected to a bypass circuit in parallel, and the bypass circuit is conductive from the input terminal of the boost circuit to the output terminal of the boost circuit in a unidirectional direction; the controlling the voltage at the output terminal of the second boost circuit to be increased to the maximum voltage includes: controlling a bypass circuit of the second boost circuit to be turned off to increase the voltage at the output terminal of the second boost circuit to the maximum voltage.

In an embodiment, the stopping boosting the first boost circuit in the inverter includes: controlling a switching device in the first boost circuit to be turned off; the controlling the voltage at the output terminal of the second boost circuit to be increased to the maximum voltage includes: controlling a switching device in the second boost circuit to be turned on to increase the voltage at the output terminal of the second boost circuit to the maximum voltage.

In a second aspect, an inverter is further provided according to the present disclosure. Where, the inverter includes a plurality of boost circuits, and input terminals of the multiple the boost circuits are connected to direct current sources, output terminals of the multiple boost circuits are connected to a direct current bus, an output terminal of the inverter is connected to a power grid to operate in a gird-connected state, and the inverter implements the method for controlling the inverter above.

In an embodiment, each of the multiple boost circuits corresponds to a bypass circuit, an input terminal of the bypass circuit is connected to the input terminal of the corresponding boost circuit, and an output terminal of the bypass circuit is connected to the output terminal of the corresponding boost circuit; each of the multiple the boost circuits includes a unidirectional component, a switch and a controller, where the unidirectional component is conductive from the input terminal of the boost circuit to the output terminal of the boost circuit in a unidirectional direction; the switch is connected to the unidirectional component in series; the controller is connected to a control terminal of the switch and is configured to control the switch to be closed while stopping boosting the boost circuit, and to control the switch to be opened while boosting the boost circuit.

In a third aspect, a device for controlling an inverter is further provided according to the present disclosure. Where, the inverter includes multiple boost circuits, a direct current bus and an inversion circuit; output terminals of the multiple boost circuits are connected to the direct current bus, and the inversion circuit obtains a direct current from the direct current bus and converts the direct current to an alternating current to output, the device includes: a determination unit, configured to determine a maximum voltage among voltages at input terminals of the multiple boost circuits and a minimum voltage for grid-connection required by the inverter for grid-connection; a regulation unit, configured to stop boosting a first boost circuit in the inverter in a case that the maximum voltage is greater than or equal to the minimum voltage for grid-connection; where a voltage at an input terminal of the first boost circuit is greater than or equal to the minimum voltage for grid-connection, and the first boost circuit includes a boost circuit, among the multiple boost circuits, which corresponds to the maximum voltage; and a processing unit, configured to control a voltage at an output terminal of a second boost circuit to be increased to the maximum voltage, wherein the second boost circuit includes the multiple boost circuits in the inverter other than the first boost circuit.

In a fourth aspect, a photovoltaic system is further provided according to the present disclosure. The photovoltaic system includes photovoltaic strings PV; an inverter including boost circuits, an inversion circuit and a direct current bus; where output terminals of the photovoltaic strings PVs are connected to input terminals of the boost circuits, output terminals of the boost circuits are connected to the direct current bus, an output terminal of the direct current bus is connected to the inversion circuit, an output terminal of the inversion circuit is connected to the power grid, and the power grid is connected to a load; the inverter is implements the method for controlling the inverter above.

A method and device for controlling an inverter, an inverter and a photovoltaic system are provided according to embodiments of the present disclosure. In the present disclosure, maximum voltage among input terminals of multiple boost circuits included in the inverter and a minimum voltage for grid-connection are firstly obtained. In a case that the maximum voltage is greater than or equal to the minimum voltage for grid-connection, a first boost circuit in the inverter is controlled to stop boosting. In addition, the voltage at an output terminal of a second boost circuit is controlled to be increased to the maximum voltage, and the second boost circuit includes other boost circuits in the inverter other than the first boost circuit. This ensures the voltage at the output terminal of the second boost circuit no longer stabilizes at the voltage that would have been increased based on the maximum voltage through the boost circuits. This method reduces the boosting ratios of the low voltage boost circuits, switching losses and temperatures of components.

### BRIEF DESCRIPTION OF THE DRAWINGS

For clearer illustration of the technical solutions according to embodiments of the present disclosure or conventional techniques, hereinafter are briefly described the drawings to be applied in embodiments of the present disclosure or conventional techniques. Apparently, the drawings in the following descriptions are only some embodiments of the present disclosure, and those skilled in the art can obtain other drawings from these drawings without any creative effort.
Figure 1 is a schematic structural diagram of an inverter according to an embodiment of the present disclosure;
Figure 2 is a schematic structural diagram of an inverter according to another embodiment of the present disclosure;
Figure 3 is a flow chart of a method for controlling an inverter according to embodiment of the present disclosure;
Figure 4 is a flow chart of a method for controlling an inverter according to another embodiment of the present disclosure; and
Figure 5 is a schematic structural diagram of a device for controlling an inverter according to an embodiment of the present disclosure.

### DETAILED DESCRIPTION

When the inverter is grid-connected, the bus voltage depends on the higher of two values, one is the maximum voltage of all the boost circuits corresponding to the inverter and the other is the minimum voltage for grid-connection calculated from the current voltage of power grid. Given that multiple boost circuits are provided in scenarios where direct current input voltages fluctuate between high and low voltages, in order to ensure that the switching devices in the boost circuits are not in the saturation region, there is a minimum boosting ratio for the boost circuits. In practice, to simplify the control method, all the boost circuits are simultaneously turned on at the direct current side, which usually leads to a higher bus voltage than the maximum voltage of the boost circuits. This leads to substantial boosting ratios of the low voltage boost circuits and significant switching losses. Additionally, it is more likely to cause component overheating and increase the surrounding temperature, which ultimately results in the inverter operating at a derating level, thereby compromising power generation output.

Based on the above problems, in the present disclosure, a maximum voltage among input terminals of multiple boost circuits and a minimum voltage for grid-connection in the inverter are firstly obtained. In a case that the maximum voltage is greater than or equal to the minimum voltage for grid-connection, a first boost circuit in the inverter is controlled to stop boosting. In addition, voltages at output terminals of second boost circuits are controlled to be increased to the maximum voltage, and the second boost circuits include all boost circuits in the inverter other than the first boost circuit. This ensures the voltages at output terminals of the second boost circuits no longer stabilizes at the voltage that would have been increased based on the maximum voltage through the boost circuits. This method reduces the boosting ratios of the low voltage boost circuits, switching losses and temperatures of components.

An embodiment of the present disclosure, an inverter is provided, where the inverter includes multiple boost circuits, each output terminal of the boost circuits is connected to the direct current bus, the output terminal of the bus is connected to the boost circuits in the inverter, the output terminal of the inversion circuit is connected to the power grid, the inverter is grid-connected and can implement a method for controlling an inverter as follows.

The power grid may supply powers to the connected loads. The inverter may be a photovoltaic inverter or an energy storage inverter.

Further, in an embodiment, multiple boost circuits may include two or more boost circuits according to practical scenarios, which is not limited in the present disclosure. Each boost circuit corresponds to a bypass circuit, an input terminal of the bypass circuit is connected to an input terminal of the boost circuit, and an output terminal of the bypass circuit is connected to an output terminal of the boost circuit. Each boost circuit includes a unidirectional component, a switch and a controller, and the unidirectional component is conductive from the input terminal of the boost circuit to the output terminal of the boost circuit in a unidirectional direction; the switch and the unidirectional component are connected in series; the controller is connected to the control terminal of the switch and is configured to control the switch to be closed while stopping boosting the boost circuit, and to control the switch to be opened while boosting the boost circuit.

In an embodiment, the controller may be a control module in the inverter.

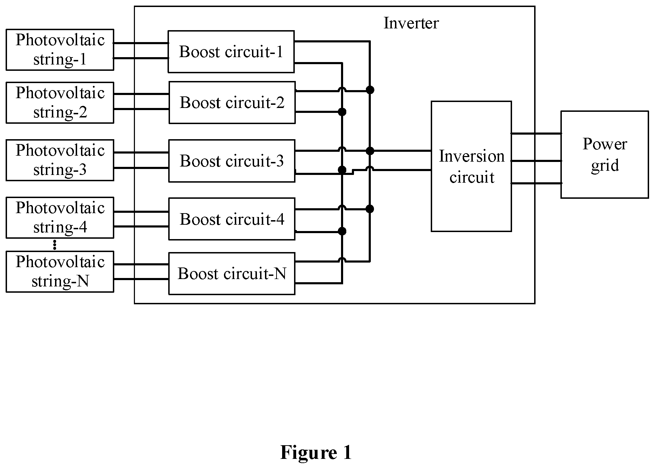

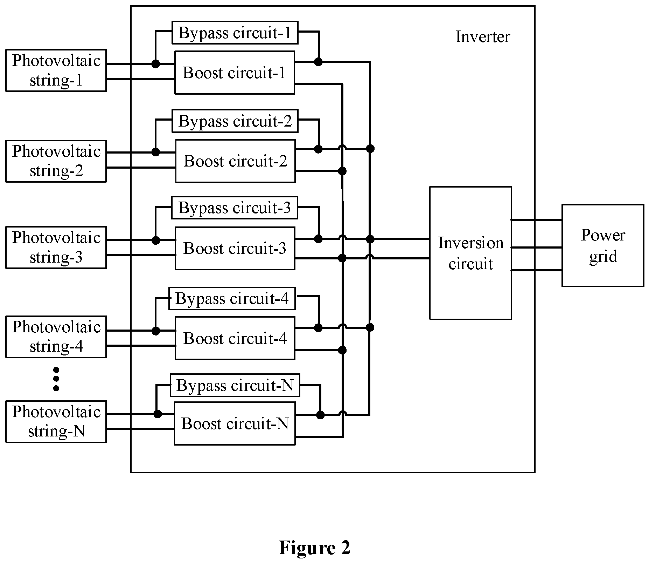

As an example, reference is made to Figure 1.Figure 1 illustrates a schematic structural diagram of an inverter. The inverter may include multiple boost circuits. For illustration only, multiple boost circuits includes a boost circuit-1, a boost circuit-2, a boost circuit-3, a boost circuit-4 and a boost circuit-N, as shown in Figure 1. Where, N is a positive integer, for example, N=5 as shown in Figure 1 and 2; an input terminal of the boost circuit-1 is connected to a corresponding photovoltaic string-1, and an output terminal of the boost circuit-1 is connected to a bus at the direct current side of the inverter (i.e., a direct current bus).

Similarly, the input terminals of the boost circuit-2, the boost circuit-3, the boost circuit-4, and the boost circuit-5 are connected to a photovoltaic string-2, a photovoltaic string-3, a photovoltaic string-4 and a photovoltaic string-5, respectively; the output terminals of the boost circuit-2, the boost circuit-3, the boost circuit-4, and the boost circuit-5 are connected to the bus at the direct current side of the inverter.

Further, reference is made to Figure 2. Figure 2 illustrates a schematic structural diagram of an inverter according to another embodiment. The boost circuit-1 may be connected to a bypass circuit-1 in parallel, and the bypass circuit-1 is configured to short-circuit the boost circuit to bypass the boost and directly output the voltage at the output terminal of the photovoltaic string-1 to the bus.

Similarly, the boost circuit-2, the boost circuit-3, the boost circuit-4, and the boost circuit-5 are connected to the bypass circuit-2, the bypass circuit-3, the bypass circuit-4 and the bypass circuit-5, respectively.

Apparently, the described embodiments are only a part of, rather than all, the embodiments of the present disclosure. All other embodiments obtained by those skilled in the art based on the embodiments of the present disclosure without any creative effort fall within the protection scope of the present disclosure.

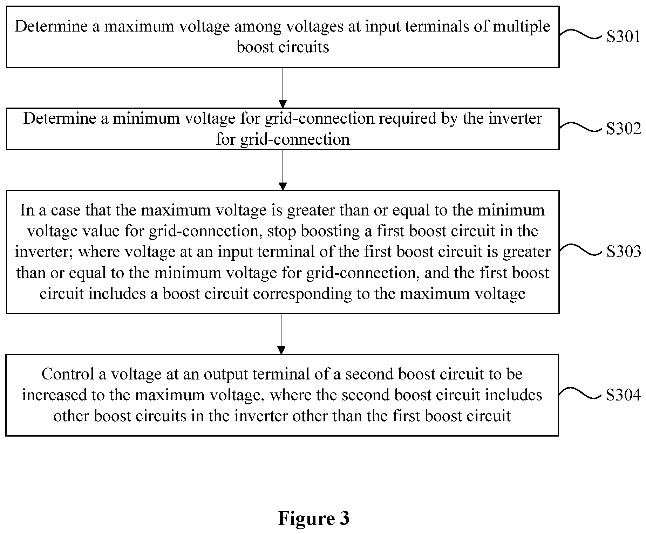

Figure 3 illustrates a flow chart of a method for controlling an inverter, and reference is made to Figure 1. A method for controlling an inverter, and the inverter includes multiple boost circuits, a direct current bus and an inversion circuit, each output terminal of each boost circuit is connected to the direct current bus, the inversion circuit is configured to obtain a direct current from the direct current bus and to convert the direct current to an alternating current to output, the method includes step S301 to step S304.

In S301, a maximum voltage among input terminals of the multiple boost circuits is determined.

The boost circuits are configured to boost (i.e., step-up) direct current voltages and transmit them to the direct current bus of the inverter. The direct current voltages may be from energy-storing components or photovoltaic panels PV The inversion circuit in the inverter converts the direct current at the direct current bus side to the alternating current and then transmits it to the power grid. The power grid then supplies power to the loads.

The boost circuits of the inverter may use a Maximum Power Point Tracking (MPPT) for boosting.

In an implementation, a maximum voltage among input terminals of the boost circuits may be determined by collecting and obtaining voltage value at input terminal of each of the multiple boost circuits and then determining the maximum value among the voltages at the input terminals of the multiple boost circuits as the maximum voltage.

As an example, the voltages at the input terminals of the boost circuit-1, the boost circuit-2, the boost circuit-3, the boost circuit-4 and the boost circuit-5 are collected. It is assumed that the voltage at the input terminal of boost circuit-1 is determined to be the maximum value, then the voltage at the input terminal of boost circuit-1 is determined as the maximum voltage.

In S302, a minimum voltage for grid-connection, which is required by the inverter for grid-connection, is determined.

When the inverter is grid-connected, the minimum voltage for grid-connection is a minimum voltage for grid-connection, which is required for the inversion, determined based on the voltage of the power grid.

In an embodiment, the minimum voltage for grid-connection may be obtained from multiplying a voltage at the power grid by 1.414 plus the resulting product to a first value. The first value ranges from 0 to 20V

In S303, in a case that the maximum voltage is greater than or equal to the minimum voltage for grid-connection, the first boost circuit in the inverter is stopped boosting; where, the voltage at an input terminal of the first boost circuit is greater than or equal to the minimum voltage for grid-connection, and the first boost circuit includes a boost circuit corresponding to the maximum voltage.

The inverter shown in Figure 1 is an example for illustration.

In a case that the maximum voltage (e.g., the voltage at input terminal of boost circuit-1) is greater than or equal to the minimum voltage for grid-connection, the boost circuit-1, boost circuit-2, boost circuit-3, boost circuit-4 and boost circuit-5 of which the voltages at the input terminals are greater than the minimum voltage for grid-connection are determined as the first boost circuits.

For example, when the voltages at input terminals of boost circuit-1 and boost circuit-2 are greater than the minimum voltage for grid-connection, in an implementation, the boost circuit-1 may be the first boost circuit. In another implementation, boost circuit-1 and boost circuit-2 may both be the first boost circuits. In other words, the first boost circuit may be one or more boost circuits corresponding to the maximum voltage. The specific quantity of the first boost circuit is determined according to practical scenarios (e.g., the quantity of the configured boost circuits in an inverter), which is not limited in the present disclosure.

In S304, a voltage at an output terminal of a second boost circuit is controlled to be increased to the maximum voltage, and the second boost circuit is a boost circuit in the inverter other than the first boost circuit. In other words, the second boost circuit may be one or more boost circuits excluding the above first boost circuit(s) in the same inverter. The specific quantity of the second boost circuit is determined according to practical scenarios (e.g., the quantity of the configured boost circuits in an inverter), which is not limited in the present disclosure.

As an example, in a case that the boost circuit-1 is the first boost circuit, then the boost circuit-2, the boost circuit-3, the boost circuit-4, and the boost circuit-5 are the second boost circuits in the inverter, and the voltages at input terminals of the boost circuit-2, the boost circuit-3, the boost circuit-4 and the boost circuit-5 are controlled to be increased to the voltage at the input terminal of the boost circuit-1. In addition, in a case that the voltage of the boost circuit increased at the minimum boosting ratio exceeds the maximum voltage, the boost circuit may keep on increasing the voltage at the minimum boosting ratio. By stopping boosting the boost circuit with the maximum voltage, it can, to some extent, reduce the high voltage that would have resulted from increasing the maximum voltage.

In order to further reduce the bus voltage at the direct current side, the boosting ratio of the low voltage boost circuits with lower voltages, and switching losses in the low voltage boost circuits, in an example, the boost circuit-1 and the boost circuit-2 may be the first boost circuits. In this case, the boost circuit-3, the boost circuit-4, and the boost circuit-5 are the second boost circuits in the inverter. Then, the voltages at input terminals of the boost circuit-3, the boost circuit-4, and the boost circuit-5 are all controlled to be the voltage at input terminal of the boost circuit-1. In addition, in a case that the boost for the boost circuit according to the minimum boosting ratio exceeds the maximum voltage, it may maintain the boost at the minimum boosting ratio.

Based on the above steps S301-S304, in the present disclosure, the maximum voltage and the minimum voltage for grid-connection corresponding to the inverter are obtained. In a case that the maximum voltage is greater than or equal to the minimum voltage for grid-connection, the maximum voltage is determined as the given voltage of the bus, and the boost of the first boost circuit is paused in the inverter. The voltage at the output terminal of the second boost circuit is controlled to be increased to the maximum voltage. This ensures that the bus voltage no longer stabilizes at the voltage that would have been increased based on the maximum voltage through the boost circuit, effectively reducing the boosting ratio of the low-voltage boost circuits, minimizing switching losses, and reducing temperatures of components.

According to embodiments of the present disclosure, there are a variety of implementations for the first boost circuit in the above-mentioned step S303, as shown in Figure 3, which are described hereinafter. It should be noted that, the implementations described below are only for illustration, which do not represent all the implementations for the present disclosure.

In an implementation, the first boost circuit is the boost circuit corresponding to the maximum voltage.

As an example, the structure of inverter in Figure 1 is provided based on the above steps S301-S304.

In step A1, a maximum voltage among voltages at input terminals of the multiple boost circuits is obtained.

The parameters of the obtained and collected voltages at input terminals of the boost circuit-1, the boost circuit-2, the boost circuit-3, the boost circuit-4 and the boost circuit-5 may be shown in table 1 below.

**Table 1**

| | Boost circuit-1 | Boost circuit-2 | Boost circuit-3 | Boost circuit-4 | Boost circuit-5 |
|---|---|---|---|---|---|
| Voltage at input terminal (V) | 350 | 330 | 320 | 310V | 310V |

In step A2, in a case that the voltage at the power grid side is 220V, then the minimum voltage for grid-connection is 220× 1.414+8.92=320V, where the first value is 8.92.

In step A3, boost circuit-1 may be directly determined as the first boost circuit while the maximum voltage (i.e., the voltage at the input terminal of the boost circuit-1 is 350V) is greater than or equal to the minimum voltage for grid-connection, i.e., 320V. In this case, the boost circuit-1 in the inverter is stopped boosting.

In step A4, the boost circuit-2, the boost circuit-3, the boost circuit-4 and the boost circuit-5 are determined as the second boost circuits in the inverter, and the voltages at the input terminals of the boost circuit-3, the boost circuit-4, and the boost circuit-5 are increased to the voltage at input terminal of the first boost circuit (350V). In addition, in a case that the voltage of the boost circuit increased at the minimum boosting ratio exceeds the maximum voltage, the boost circuit may keep on increasing the voltage at the minimum boosting ratio. By stopping boosting the boost circuit with the maximum voltage, it can, to some extent, reduce the high voltage that would have resulted from increasing the maximum voltage.

In another implementation, the first boost circuit is the boost circuit of which the voltage at the input terminal is greater than or equal to a first threshold. Where, the first threshold is the larger one between the minimum voltage for grid-connection and the result of the maximum voltage minus a first voltage difference; and the first voltage difference is obtained from multiplying the maximum voltage by the minimum boosting ratio of the boost circuit corresponding to the maximum voltage minus the maximum voltage.

As an example, the structure of inverter in Figure 1 is provided as an example based on the above steps S301-S304.

In step B1, a maximum voltage among voltages at input terminals of the multiple boost circuits is obtained.

The voltages at the input terminals of the boost circuit-1, the boost circuit-2, the boost circuit-3, the boost circuit-4, and the boost circuit-5 are collected and obtained, as shown in table 1 above.

In step B2, the minimum voltage for grid-connection is determined as 320V

In step B3, in a case that the maximum voltage is greater than or equal to the minimum voltage for grid-connection, the first boost circuit in the inverter is stopped boosting.

The minimum boosting ratio of the boost circuits is set as 1.1.

In this case, the first voltage difference is: the maximum voltage (i.e., 350V) × the minimum boosting ratio (i.e.,1.1)-the maximum voltage (i.e., 350V) =35V

The maximum voltage (i.e., 350V)-the first voltage difference (i.e., 35V) = 315V Since the first threshold is the larger one between the minimum voltage for grid-connection (i.e., 320V) and the maximum voltage minus the first voltage difference (i.e., 315V), the first threshold is, then, 320V Since the first boost circuit is the boost circuit of which the voltage at the input terminal is greater than or equal to the first threshold, then the first boost circuits are the boost circuit-1 (i.e., 350V>320V) and the boost circuit-2 (i.e., 320V=320V). Furthermore, the first boost circuits (the boost circuit-1 and boost circuit-2) are stopped boosting.

In step B4, the voltages at the output terminals of the second boost circuits (i.e., the boost circuit-3, boost circuit-4 and boost circuit-5) are controlled to be increased to the maximum voltage (i.e., 350V).

The second boost circuits include other boost circuits in the inverter excluding the first boost circuits.

In another implementation, the maximum voltage is equal to the minimum voltage for grid-connection.

In step C1, the parameters of the obtained and collected voltages at input terminals of the boost circuit-1, the boost circuit-2, the boost circuit-3, the boost circuit-4 and the boost circuit-5 may be shown in table 2 below.

**Table 2**

| | Boost circuit-1 | Boost circuit-2 | Boost circuit-3 | Boost circuit-4 | Boost circuit-5 |
|---|---|---|---|---|---|
| Voltage of input terminal (V) | 320 | 320 | 310 | 280V | 290V |

In step C2, the minimum voltage for grid-connection is determined as 320V

In step C3, the boost circuits corresponding to the maximum voltage are determined as the boost circuit-1 and the boost circuit-2, and the voltages at the input terminals of them are equal to the minimum voltage for grid-connection (i.e., 320V). In this case, the boost circuit-1 and boost circuit-2 are determined as the first boost circuits. And the first boost circuits in the inverter is stopped boosting.

In step C4, the voltages at the output terminals of the second boost circuits (i.e., the boost circuit-3, boost circuit-4 and boost circuit-5) are increased to the maximum voltage. Where, the maximum voltage is 320V

In addition, in a case that the minimum boosting ratio is set as 1.1, then the voltage (i.e., 310V) at the input terminal of the boost circuit-3 multiplied by 1.1 is 341. In other words, the boost circuit-3 increases its corresponding voltage at its input terminal and outputs the increased voltage (i.e., 341V) via its output terminal. Even though its outputted voltage 341V exceeds 320V, the boost circuit-3 may keep on increasing its voltage at the minimum boosting ratio 1.1 to ensure to reach the minimum voltage for grid-connection.

In another implementation, in a case that the maximum voltage is less than the minimum voltage for grid-connection, the voltages at the output terminals of the boost circuits in the inverter are controlled to be increased to the minimum voltage for grid-connection.

In step D1, the parameters of the obtained and collected voltages at input terminals of the boost circuit-1, the boost circuit-2, the boost circuit-3, the boost circuit-4 and the boost circuit-5 may be shown in table 3 below.

**Table 3**

| | Boost circuit-1 | Boost circuit-2 | Boost circuit-3 | Boost circuit-4 | Boost circuit-5 |
|---|---|---|---|---|---|
| Voltage of input terminal (V) | 310 | 300 | 300 | 280V | 290V |

In step D2, the minimum voltage for grid-connection is determined as 320V

In step D3, it is determined that the maximum voltage (i.e., 310V) is less than the minimum voltage for grid-connection (i.e., 320V), and the voltages at the output terminals of the boost circuits included in the inverter are controlled to be increased to the minimum voltage for grid-connection.

In this case, since none of the boost circuit-1, boost circuit-2, boost circuit-3, boost circuit-4 and boost circuit-5 can be determined as the first boost circuits, all boost circuits are the second boost circuits.

The voltages at the output terminals of all boost circuits (i.e., the boost circuit-1, boost circuit-2, boost circuit-3, boost circuit-4 and boost circuit-5) in the inverter are controlled to be increased to the minimum voltage for grid-connection. Where, the minimum voltage for grid-connection is 320V

In addition, in a case that the minimum boosting ratio is set as 1.1, then the voltage (i.e., 310V) at the input terminal of the boost circuit-1 multiplied by 1.1 is 341. In other words, the boost circuit-1 increases its corresponding voltage at its input terminal and outputs the increased voltage (i.e., 341V) via its output terminal. Even though its outputted voltage 341V exceeds 320V, the boost circuit-1 may keep on increasing its voltage at the minimum boosting ratio to ensure to reach the minimum voltage for grid-connection.

According to the embodiments of the present disclosure, there are various implementations of the step of stopping boosting the first boost circuit in the inverter in step S303 as shown in Figure 3, which are respectively described hereinafter. It should be noted that, the implementations described below are only for illustration, which do not represent all implementations for the present disclosure.

In an implementation, a bypass circuit of the first boost circuit may be controlled to turn on to short-circuit the first boost circuit. Each boost circuit is connected to a bypass circuit in parallel. Where, the bypass circuit is conductive from the input terminal of the boost circuit to the output terminal of the boost circuit in a unidirectional direction.

In an embodiment, the connection structural diagram of the bypass circuits and the boost circuits shown in Figure 2 is made as a reference.

As an example, the boost circuit-1 is stopped boosting in step A3 above, the switch of the bypass circuit-1 that is connected to the boost circuit-1 in parallel may be controlled to be turned on. The boost circuit-1 is then short-circuited and the boost circuit-1 is stopped increasing the voltage at input terminal of the boost circuit-1.

In another implementation, the switching device of the first boost circuit is turned off, to disable the first boost circuit.

As an example, in step A3 above, the first boost circuit is boost circuit-1, the boost circuit-1 is stopped boosting may include: controlling the switching device in the boost circuit-1 to be turned off to stop boosting the boost circuit-1, i.e., to disable the boost circuit-1. The switching device of the boost circuit-1 may be turned off by a disabling signal. Where, the disabling signal may be a pulse width modulation (PWM) signal sent by the controller, e.g., the control module. The control module may adjust the duty cycle of PWM signal, for example, lowering the duty cycle, to disable the second boost the boost circuit-1.

The controlling the voltage at the output terminal of the second boost circuit to be increased to the maximum voltage includes: controlling the bypass circuit of the second boost circuit to be disconnected so that the voltage at the output terminal of the second boost circuit is increased to the maximum voltage.

According to embodiments of the present disclosure, there are a variety of implementations of controlling the voltage at the output terminal of the second boost circuit to be increased to the maximum voltage in the above-mentioned step S304, as shown in Figure 3, which are described hereinafter. It should be noted that, the implementations described below are only for illustration, which do not represent all the implementations for the present disclosure.

In an implementation, the bypass circuit of the second boost circuit is controlled to be disconnected, so that the voltage at the output terminal of the second boost circuit is increased to the maximum voltage.

As an example, in step A3 above, the second boost circuits are the boost circuit-2, the boost circuit-3, the boost circuit-4 and the boost circuit-5. In this case, the switch in the bypass circuit-2 that is connected to the boost circuit-2 in parallel, the switch in the bypass circuit-3 that is connected to the boost circuit-3 in parallel, the switch in the bypass circuit-4 that is connected to the boost circuit-4 in parallel, and the switch in the bypass circuit-5 that is connected to the boost circuit-5 in parallel, are controlled to be turned off. In this way, the boost circuit-2, boost circuit-3, boost circuit-4 and boost circuit-5 are boosted to the maximum voltage.

In another implementation, the switching devices of the second boost circuits are turned on, to enable the second boost circuits. When the second boost circuits are enabled, the voltages at the output terminals of the second boost circuits are increased to the maximum voltage. For each second boost circuit, the switching device of the second boost circuit may be turned on by an enabling signal. Where, the enabling signal may be a PWM signal sent by the controller, e.g., the control module. The control module may adjust the duty cycle of PWM signal, for example, increasing the duty cycle, to enable the second boost circuit.

As an example, in step A3 above, the second boost circuits are the boost circuit-2, boost circuit-3, boost circuit-4 and boost circuit-5. Then the switching device of the boost circuit-2, the switching device of boost circuit-3, the switching device of the boost circuit-4 and the switching device of the boost circuit-5 are turned on, and the respective voltages of the boost circuit-2, the boost circuit-3, the boost circuit-4 and the boost circuit-5 are increased to the maximum voltage.

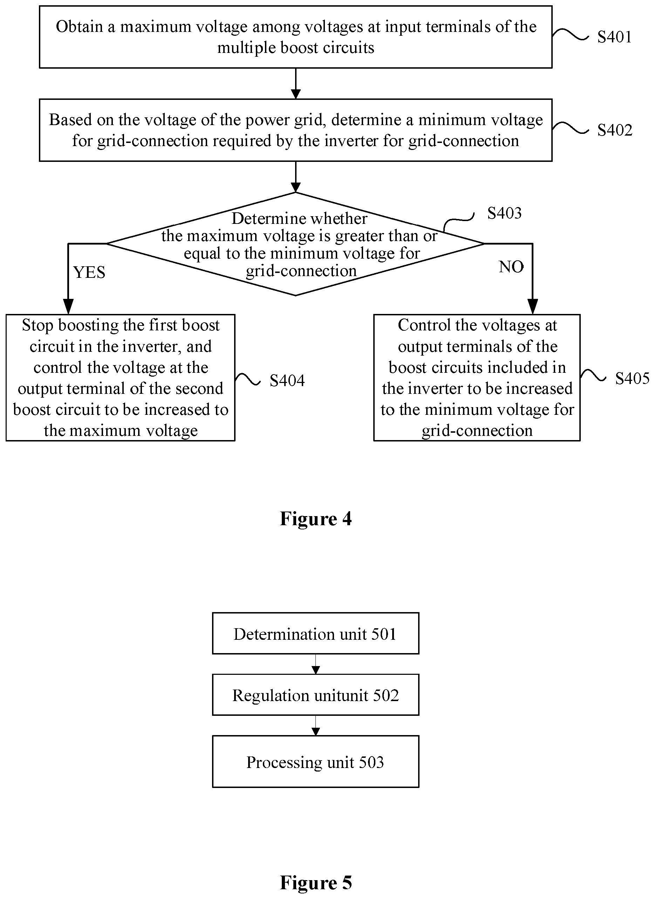

Based on the above-described method for controlling an inverter and the inverter structure in Figure 2, an application method for controlling an inverter is further provided according to the present disclosure. The details of which are as shown in Figure 4, Figure 4 is a schematic flowchart of an application method for controlling an inverter.

An application method for controlling the inverter includes steps S401 to S405.

In step S401, a maximum voltage among voltages at input terminals of the multiple boost circuits is obtained.

As an example, the voltages at input terminals of the boost circuit-1, the boost circuit-2, the boost circuit-3, the boost circuit-4 and the boost circuit-5 are collected and obtained; and the voltage at the input terminal of boost circuit-1 is determined as the maximum voltage among the five boost circuits.

In step S402, based on the voltage of the power grid, a minimum voltage for grid-connection required by the inverter for grid-connection is determined.

As an example, the voltage of the power grid is 220V, then the minimum voltage for grid-connection may be obtained from multiplying 220V by 1.414 plus a first value. Where the first value is 8.92, and the minimum voltage for grid-connection is 320V

In step S403, whether the maximum voltage is greater than or equal to the minimum voltage for grid-connection is determined.

In step S404, in a case that the maximum voltage is greater than the minimum voltage for grid-connection, the first boost circuit in the inverter is stopped boosting, and the voltage at the output terminal of the second boost circuit is controlled to be increased to the maximum voltage.

The voltage at the input terminal of the first boost circuit is greater than or equal to the minimum voltage for grid-connection, the first boost circuit includes a boost circuit corresponding to the maximum voltage. The second boost circuit includes other boost circuit(s) in the inverter excluding the first boost circuit.

As an example, the steps 5403-5404 above can refer to steps A3-A4 or steps B3-B4 when the maximum voltage is greater than the minimum voltage for grid-connection; and steps 5403-5404 above can refer to steps C3-C4 when the maximum voltage is equal to the minimum voltage for grid-connection.

In an embodiment, the bypass circuit corresponding to the first boost circuit is turned on, while the bypass circuit corresponding to the second boost circuit is turned off. The voltage at the output terminal of the second boost circuit is controlled to be increased to the maximum voltage (the voltage at the input terminal of the boost circuit-1).

In step S405, in a case that the maximum voltage is less than the minimum voltage for grid-connection, the voltages at output terminals of the boost circuits in the inverter are controlled to be increased to the minimum voltage for grid-connection.

As an example, steps D1-D3 above may be made as a reference.

In an embodiment, the boost circuits in the inverter include the boost circuit-1, the boost circuit-2, the boost circuit-3, the boost circuit-4 and the boost circuit-5. In this case, the voltages at output terminals of the boost circuits in the inverter are controlled to be increased to the minimum voltage for grid-connection includes: the boost circuit-1 increases its voltage at the output terminal to the minimum voltage for grid-connection; the boost circuit-2 increases its voltage at the output terminal to the minimum voltage for grid-connection; the boost circuit-3 increases its voltage at the output terminal to the minimum voltage for grid-connection; the boost circuit-4 increases its voltage at the output terminal to the minimum voltage for grid-connection; and the boost circuit-5 increases its voltage at the output terminal to the minimum voltage for grid-connection. In a case that the boost circuit increases its voltage at the minimum boosting ratio and the increased voltage beyond a set bus voltage, the boost circuit may keep on increasing the voltage at the minimum boosting ratio.

The above are some specific implementations of the method for controlling an inverter provided according to embodiments of the present disclosure. Based on the description above, a corresponding device is further provided in the present disclosure. The device provided by embodiments of the present disclosure will be described below from the perspective of functional modularization.

Figure 5 illustrates a schematic structural diagram of a device for controlling an inverter. As shown in Figure 5, a device for controlling an inverter includes multiple boost circuits, a direct current bus and an inversion circuit; each output terminal of the boost circuits is connected to the direct current bus, and the inversion circuit is configured to acquire a direct current from the direct current bus and to convert the direct current to an alternating current to output, the device includes a determination unit 501, a regulation unit 502 and a processing unit 503 as follows.

The determination unit 501 is configured to determine a maximum voltage among voltages at input terminals of the multiple boost circuits and a minimum voltage for grid-connection required by the inverter for grid-connection.

The regulation unit 502 is configured to stop boosting a first boost circuit in the inverter in a case that the maximum voltage is greater than or equal to the minimum voltage for grid-connection; where a voltage at an input terminal of the first boost circuit is greater than or equal to the minimum voltage for grid-connection, and the first boost circuit includes a boost circuit, among the multiple boost circuits, which corresponds to the maximum voltage.

The processing unit 503 is configured to control a voltage at an output terminal of a second boost circuit to be increased to the maximum voltage, and the second boost circuit includes other boost circuits in the inverter other than the first boost circuit.

According to a device for controlling an inverter as described above, in the present disclosure, a maximum voltage and a minimum voltage for grid-connection are firstly obtained through the determination unit 501. In a case that the maximum voltage is greater than or equal to the minimum voltage for grid-connection, a first boost circuit in the inverter is stopped boosting through the regulation unit 502. Then the processing unit 503 controls the voltage at an output terminal of a second boost circuit to be increased to the maximum voltage. Where, the maximum voltage is the maximum voltage among the voltages of input terminals in the multiple boost circuits. By stopping boosting the boost circuit with the maximum voltage, the bus voltage at the direct current side is reduced, causing a reduced boosting ratio of the low voltage boost circuits, which can lower the switching losses and the temperature of the components.

As an example, the minimum voltage for grid-connection is obtained from multiplying a voltage of a power grid by 1.414 plus a first value, and the first value ranges from 0 to 20V.

In an implementation, the processing unit 503 is further configured to control voltages of output terminals of boost circuits included in the inverter to be increased to the minimum voltage for grid-connection, in a case that the maximum voltage is less than the minimum voltage for grid-connection.

In another implementation, the first boost circuit is the boost circuit corresponding to the maximum voltage. Alternatively, the first boost circuit is a boost circuit, among the multiple boost circuits, of which the voltage at the input terminal is greater than or equal to a first threshold; the first threshold is a larger one between the minimum voltage for grid-connection and the maximum voltage minus a first voltage difference, and the first voltage difference is the maximum voltage multiplied by a minimum boosting ratio minus the maximum voltage, the minimum boosting ratio corresponds to the boost circuit corresponding to the maximum voltage.

In another implementation, the regulation unit 502 is further configured to control a bypass circuit of the first boost circuit to be turned on to short-circuit the first boost circuit; where, each boost circuit is connected to a bypass circuit in parallel, and the bypass circuit is conductive from the input terminal of the boost circuit to the output terminal of the boost circuit in a unidirectional direction.

The processing unit 503 is further configured to control a bypass circuit of the second boost circuit to be turned off to increase the voltage at the output terminal of the second boost circuit to the maximum voltage.

In another implementation, the regulation unit 502 is further configured to control a switching device in the first boost circuit to be turned off.

The processing unit 503 is further configured to control a switching device in the second boost circuit to be turned on to increase the voltage at the output terminal of the second boost circuit to the maximum voltage.

The above embodiments of the present disclosure provide some specific implementations of the method for controlling the inverter, based on which the present disclosure also provides a corresponding system. The embodiments of the present disclosure will be described below from a system perspective.

A photovoltaic system includes photovoltaic strings PV, an inverter including boost circuits, an inversion circuit and a direct current bus; where, output terminals of the photovoltaic strings PVs are connected to input terminals of the boost circuits, output terminals of the boost circuits are connected to the direct current bus, an output terminal of the direct current bus is connected to the inversion circuit, an output terminal of the inversion circuit is connected to the power grid, and the power grid is connected to a load; the inverter is configured to implement the above method for controlling the inverter.

According to the embodiments of the present disclosure, a corresponding device and a computer storage medium are further provided to implement the solutions provided in embodiments of the present disclosure.

Where, the device includes a memory and a processor, the memory is configured to store instructions or code, the processor is configured to executing the instructions or code to enable the device to implement the method for controlling the inverter according to any one of the embodiments of the present disclosure as described above.

The computer storage medium has code stored thereon, and when the code is running, the device running the code implements the method for controlling the inverter according to any one of the embodiments of the present disclosure as described above.

It should be noted that the terms such as "first" and "second" in the embodiments of the present disclosure are intended to distinguish similar objects rather than describe a particular sequence or a particular order.

From the above embodiments, it can be clearly appreciated by those skilled in the art that, all or a part of steps in the methods according to the above embodiments may be implemented by means of software and general hardware platform. Based on such understanding, technical solutions of the present disclosure may be embodied as a software product. The computer software product may be stored in a storage medium, such as a read-only memory (ROM)/RAM, a magnetic disc, or an optical disk, etc. The computer software product includes multiple instructions for enabling a computer device (which may be a personal computer, a server, or a network communication device such as a router) to implement the method for controlling the inverter according to any one of the embodiments of the present disclosure as described above.

The embodiments in this specification are described in a progressive manner, the same and similar parts between embodiments may be referred to each other, and each embodiment focuses on the differences from other embodiments. Since the device disclosed in the embodiments is basically similar to the method therein, the description thereof is relatively simple, and for relevant matters, reference is to the description of the method embodiments. Part or all of the modules may be selected according to actual needs to achieve the purpose of the solutions of the embodiments. Those skilled in the art may understand and implement the present disclosure without any creative effort.

The above description is only embodiments of the present disclosure for illustration, which is not intended to limit the protection scope of the present disclosure.

## Claims

1. A method for controlling an inverter,
wherein the inverter comprises a plurality of boost circuits, a direct current bus and an inversion circuit, an output terminal of each of the plurality of boost circuits is connected to the direct current bus, the inversion circuit obtains a direct current from the direct current bus and converts the direct current to an alternating current for output,
wherein the method comprises:
determining a maximum voltage among voltages at input terminals of the plurality of boost circuits and a minimum voltage for grid-connection required by the inverter for grid-connection;
stopping boosting a first boost circuit in the inverter in a case that the maximum voltage is greater than or equal to the minimum voltage for grid-connection; wherein a voltage at an input terminal of the first boost circuit is greater than or equal to the minimum voltage for grid-connection, and the first boost circuit comprises a boost circuit, among the plurality of boost circuits, which corresponds to the maximum voltage; and
controlling a voltage at an output terminal of a second boost circuit to be increased to the maximum voltage, wherein the second boost circuit comprises the plurality of boost circuits in the inverter other than the first boost circuit.

2. The method according to claim 1, further comprising:
controlling voltages of output terminals of the plurality of boost circuits comprised in the inverter to be increased to the minimum voltage for grid-connection, in a case that the maximum voltage is less than the minimum voltage for grid-connection.

3. The method according to claim 1, wherein the first boost circuit is the boost circuit corresponding to the maximum voltage.

4. The method according to claim 1, wherein the first boost circuit is a boost circuit, among the plurality of boost circuits, of which the voltage at the input terminal is greater than or equal to a first threshold; wherein the first threshold is a larger one between the minimum voltage for grid-connection and the maximum voltage minus a first voltage difference, and the first voltage difference is the maximum voltage multiplied by a minimum boosting ratio minus the maximum voltage, wherein the minimum boosting ratio corresponds to the boost circuit corresponding to the maximum voltage.

5. The method according to claim 1, wherein the minimum voltage for grid-connection is obtained from multiplying a voltage of a power grid by 1.414 plus a first value, and the first value ranges from 0 to 20V.

6. The method according to claim 2, wherein the stopping boosting the first boost circuit in the invert comprises:
controlling a bypass circuit of the first boost circuit to be turned on to short-circuit the first boost circuit; wherein each of the plurality of boost circuits is connected to a bypass circuit in parallel, and the bypass circuit is conductive from the input terminal of the boost circuit to the output terminal of the boost circuit in a unidirectional direction;
the controlling the voltage at the output terminal of the second boost circuit to be increased to the maximum voltage comprises:
controlling a bypass circuit of the second boost circuit to be turned off to increase the voltage at the output terminal of the second boost circuit to the maximum voltage.

7. The method according to claim 2, wherein the stopping boosting the first boost circuit in the inverter comprises:
controlling a switching device in the first boost circuit to be turned off;
the controlling the voltage at the output terminal of the second boost circuit to be increased to the maximum voltage comprises:
controlling a switching device in the second boost circuit to be turned on to increase the voltage at the output terminal of the second boost circuit to the maximum voltage.

8. An inverter, comprising:
a plurality of boost circuits, and input terminals of the plurality of the boost circuits are connected to direct current sources, output terminals of the plurality of boost circuits are connected to a direct current bus, an output terminal of the inverter is connected to a power grid to operate in a gird-connected state, wherein the inverter implements the method for controlling the inverter according to any one of claims 1 to 7.

9. The inverter according to claim 8, wherein each of the plurality of boost circuits corresponds to a bypass circuit, an input terminal of the bypass circuit is connected to the input terminal of the corresponding boost circuit, and an output terminal of the bypass circuit is connected to the output terminal of the corresponding boost circuit;
each of the plurality of the boost circuits comprises a unidirectional component, a switch and a controller, wherein
the unidirectional component is conductive from the input terminal of the boost circuit to the output terminal of the boost circuit in a unidirectional direction;
the switch is connected to the unidirectional component in series;
the controller is connected to a control terminal of the switch and is configured to control the switch to be closed while stopping boosting the boost circuit, and to control the switch to be opened while boosting the boost circuit.

10. A device for controlling an inverter, wherein the inverter comprises a plurality of boost circuits, a direct current bus and an inversion circuit; output terminals of the plurality of boost circuits are connected to the direct current bus, and the inversion circuit obtains a direct current from the direct current bus and converts the direct current to an alternating current for output, the device comprises:
a determination unit, configured to determine a maximum voltage among voltages at input terminals of the plurality of boost circuits and a minimum voltage for grid-connection required by the inverter for grid-connection;
a regulation unit, configured to stop boosting a first boost circuit in the inverter in a case that the maximum voltage is greater than or equal to the minimum voltage for grid-connection; wherein a voltage at an input terminal of the first boost circuit is greater than or equal to the minimum voltage for grid-connection, and the first boost circuit comprises a boost circuit, among the plurality of boost circuits, which corresponds to the maximum voltage; and
a processing unit, configured to control a voltage at an output terminal of a second boost circuit to be increased to the maximum voltage, wherein the second boost circuit comprises the plurality of boost circuits in the inverter other than the first boost circuit.

11. A photovoltaic system, comprising:
photovoltaic strings PV;
an inverter comprising boost circuits, an inversion circuit and a direct current bus;
wherein output terminals of the photovoltaic strings PVs are connected to input terminals of the boost circuits, output terminals of the boost circuits are connected to the direct current bus, an output terminal of the direct current bus is connected to the inversion circuit, an output terminal of the inversion circuit is connected to the power grid, and the power grid is connected to a load; the inverter implements the method for controlling the inverter according to any one of claims 1 to 7.
